# EUROPEAN PATENT SPECIFICATION

(11) **EP 2 714 818 B1**
(45) Date of publication and mention of the grant of the patent: **31.10.2018**
(21) Application number: 12724028.1
(22) Date of filing: 16.05.2012
(51) Int. Cl.: C09D 5/08, C08G 18/08, C08G 59/42, C09D 163/00, C09D 175/04, B05D 7/16, B05D 7/00

(54) **COATING SYSTEM COMPRISING HIGH ACID RESIN**
BESCHICHTUNGSSYSTEM MIT EINEM HARZ MIT HOHEM SÄUREGEHALT
SYSTÈME DE REVÊTEMENT COMPRENANT UNE RÉSINE HAUTEMENT ACIDE

(30) Priority: 24.05.2011 US 201161489307 P
(43) Date of publication of application: 09.04.2014
(73) Proprietor: The Sherwin-Williams Company, Cleveland, OH 44115 (US)
(72) Inventor: WAYTON, Brian J., Medina, OH 44256 (US)
(74) Representative: Heinemann, Monica
(86) International application number: PCT/US2012/038109
(87) International publication number: WO 2012/162056

(56) References cited:
- WO-A1-96/10595
- US-A- 3 699 064
- US-A- 5 789 085
- US-A1- 2003 024 432
- US-A1- 2009 092 801

## Description

The use of so-called "sol-gel" film pretreatments of metal substrates to facilitate adhesion of subsequently applied primer and basecoats has become more commonplace, particularly in the aerospace industry. The term "sol-gel", which is a contraction of solution-gelation, refers to a series of reactions occuring in these pretreatment coatings whereby a soluble organometallic species in the formulation, typically a metal alkoxide or metal salt, hydrolyzes to form a metal hydroxide and further condenses to form metal-oxygen-metal bonds for example Si-O-Si, Si-O-Zr, and Si-O-Al.

The description and use of sol-gel films has been widely discussed elsewhere, but it is generally recognized that sol-gel films promote adhesion by having a metallic portion that is capable of bonding covalently with the metal substrate and an organic portion that is capable of bonding covalently with the resin(s) of a subsequently applied coating, such as a primer coating.

The strength and durability of the sol-gel film depends upon chemical and micro-mechanical interactions at the surface of the metal involving, for example, the tendency of the sol-gel film to rehydrate and the porosity and microstructure of the metal. When properly implemented, the sol-gel coatings provide surface stability for paint adhesion. As noted above, the sol-gel process relies on a combination of hydrolysis and condensation reactions. The relative rates of hydrolysis and condensation, and the structure and characteristics of the resultant sol-gel film are controlled by a number of factors, which may include such things as the pH of the environment in and around the sol-gel layer and the concentration of reagents and catalysts in that environment, including the presence and levels of acids or bases. Of particular concern, if the sol-gel layer destabilizes, adhesion of the subsequent coating layers to the substrate may be lost.

One approach to drive the condensation reaction in the sol-gel film is to bake the sol-gel pre-treated substrate. This is a complex and expensive process, and, though it effectively drives condensation of the sol-gel film, the process does not necessarily prevent subsequent hydrolysis in the sol-gel film, which can destabilize the film.

A sol-gel composition that is particularly useful and common for coating aluminum and titanium surfaces is based on a combination of organometallic and organosilane components. The preferred organometallic compound for use in a sol-gel for coating aluminum and titanium surfaces is an alkoxy metallic compound, and more preferably an alkoxy zirconium compound. Because of its ready commercial availability, zirconium (Zr) (IV) n-propoxide is particularly preferred as the organometallic compound. In addition to covalently bonding to the metal surface, the organozirconium compound also serves to minimize the diffusion of oxygen to the surface and to stabilize the metal-resin interface. Epoxy-functionalized silanes are the preferred organosilanes because of their stability in solution and their ability to crosslink with common, aerospace epoxy or urethane adhesives. The silane is acid-base neutral, so its presence in the sol-gel mixture does not increase the relative hydrolysis and condensation rates of the alkoxy metallic compounds. Sol-gels including the organosilanes are relatively easy to prepare and to apply with reproducible results, as is taught extensively elsewhere.

One widely used sol-gel formulation is Boegel-EPII™, developed by The Boeing Company, Seattle, Wash. The Boegel-EPII™ composition is a combination of 3-glycidoxypropyltrimethoxysilane (GTMS) and Zr (IV) n-propoxide which is reacted in the presence of an acetic acid stabilizer. The GTMS has an active epoxy group which can react with common epoxy and urethane resins. GTMS does not form strong Lewis acid-base interactions with the hydrated metal oxide substrate. The zirconium in the mixture tends to react more quickly with the oxide surface of the metal, allowing the desired stratification of the sol-gel film with the epoxy groups of the silane coupling agents oriented toward the resin layer.

In conventional coating systems applied to substrates pretreated with a sol-gel film layer, the coating applied directly atop of the sol-gel is is typically neutral or basic (pH>7), exemplified by the amine cured epoxy resin coatings commonly employed in the aerospace industry as primer and basecoat compositions. When employed as a primer coat, this initial neutral or basic coating, which may also contain corrosion inhibitors, has the primary functions of inhibiting substrate corrosion and sol-gel film destabilization, which can result from abrasion or exposure to environmental agents, such as salts, water, deicing solutions, and the like, and to provide a surface on which the decorative coat(s) can be applied.

The decorative coat, which typically contains the colored pigments, imparts color to the substrate. One or more layers of a decorative coat may be applied. Once the decorative coat(s) have been applied, one or more coats of a transparent coat may be applied to protect the decorative coat.

Application of a coating system as just described is a time consuming process, even in the absence of a sol-gel bake step, as each element (primer, basecoat, topcoat) must be applied in one or more coats and allowed to cure appropriately. Failure in any one of the elements may be detrimental to the performance of the entire system leading to aesthetic or physical damage to the substrate, necessitating repair. Moreover, any incompatibility between the layers can result in system failure. WO 96/10595 A1 describes to two-part reactive polyurethane compositions and the cured coatings prepared therefrom. US 2009/092801 A1 relates to a nonaqueous ink composition for an ink jet recording, comprising (A) a urethane resin dispersant with an acidic functional group, (B) a pigment, and (C) an organic solvent and optionally (D) a thermal reactive compound, characterized in that the urethane resin dispersant (A) is a branched urethane resin dispersant prepared by polymerizing a terminal-isocyanate-containing compound.

It would be beneficial to reduce the number of elements in a coating system to a minimum necessary to adequately protect the substrate from environmental exposure and to provide a durable and decoratively pleasing appearance. By reducing the number of elements in the system, the propensity for system failure may be reduced. There are fewer elements that can contribute to system failure and fewer, potentially disparate interactions between coating layers. Moreover, limiting the number of elements in a coating system may reduce application and refinish time, weight, and application and repair cost. It would further be beneficial to provide a coating system that does not require a bake, particularly of the sol-gel film.

According to the present invention, it has been discovered that applying a residual high acid value coating directly on top of a sol-gel layer assists in stabilizing the sol-gel layer, allowing for a decorative coat to be applied without the need for an intervening primer coat. The residual high acid value coatings taught herein show excellent adhesion to the sol-gel layer and provide support to the integrity of the sol-gel layer, thereby facilitating adhesion of the overall coating system to the substrate.

For purposes of this invention, the term " residual high acid value coating" means a film-forming coating composition that when cured, has sufficient residual free acid groups to provide the film with the equivalent of an acid number of greater than mgKOH/g and in another embodiment, greater than about 75 mgKOH/g, and in another embodiment, greater than about 85 mgKOH/g, and in another embodiment, greater than about 100 mgKOH/g, and in another embodiment, greater than about 125 mgKOH/g, and in still further embodiment, greater than about 150 mgKOH/g, and in still further embodiments, greater than about 200 mgKOH/g or, alternatively, 250 mgKOH/g or, alternatively, 300 mgKOH/g. " Residual free acid groups" refers to acid groups in the cured coating that were not consumed in crosslinking with other compounds in the coating or with compounds in adjacent coating layers. Preference is given to carboxylic acid groups, though, in some embodiments, minimal amounts of other acids may be employed.

As noted above, the present invention is notable for providing a coating system applied to a sol-gel pretreated substrate, in which it is possible to eliminate a separate primer layer between the sol-gel pre-treatment layer and the decorative coat. This may decrease the number of elements in the system while maintaining and in some embodiments, improving coating performance, durability, and decorative functionality. Further, it is not necessary, in the practice of the present invention, to bake the sol-gel pretreatment. It is theorized that the high level of residual free acid groups in the residual high acid value coating assists in moderating the pH at the upper surface of the sol-gel layer in an acidic range (pH <7) which is a favorable condition for the initial hydrolysis reaction which must take place during sol-gel film development. It is further theorized that, by maintaining an acidic environment in the residual high acid value coating next to the sol-gel film, the integrity of the condensed sol-gel film is enhanced and maintained.

According to the invention, the residual high acid value coating comprises a solvent-borne composition comprising one or more residual high acid value resins (described below). The residual high acid value coating may optionally include one or more non-volatile, acid functional compounds, and/or one or more epoxy functional compounds, as described in greater detail below. In some embodiments, the residual high acid value coating may be a two part, referred to as a 2K system, comprising a polyol and a suitable crosslinker.

The residual high acid value coating comprises one or more residual high acid value resins; namely, resins that cure having residual free acid groups to provide the resin with the equivalent of an acid number of greater than 65 mgKOH/g, and in another embodiment, greater than about 75 mgKOH/g, and in another embodiment, greater than about 85 mgKOH/g, and in another embodiment, greater than about 100 mgKOH/g, and in another embodiment, greater than about 125 mgKOH/g, and in still further embodiment, greater than about 150 mgKOH/g, and in still further embodiments, greater than about 200 mgKOH/g or 250 mgKOH/g or 300 mgKOH/g.

Calculation of the equivalent acid value of either a residual high acid value coating or a residual high acid value resin may be achieved by calculating the minimum expected free acids generated by the starting materials in the residual high acid value coating composition in view of reaction processes that occur within the coating and between coating layers.

The presence of free acid groups in the cured resin raises the acid value of the resin film and may additionally provide sites for covalent bonding with organic portions of the sol-gel layer, such as epoxy groups, and hydrogen bonding with residual SiOH groups. Notwithstanding, the cured films derived from the residual high acid value coating compositions taught herein, have sufficient free acid groups to provide the selected acid equivalent value after accounting for any such intralayer bonding through acid groups in the residual high acid value coating.

According to the invention, the residual high acid value resin is derived as the reaction product of one or more polyols with a polyanhydride. Reaction of the hydroxyl opens the anhydride ring and generates an ester linkage and a free carboxylic acid group, which may subsequently react with an epoxy group or other organic ligand from the sol-gel composition or remain unreacted as a free acid group. It is noted that free acid groups may be created by reaction of epoxy groups in the sol-gel layer with free anhydride rings on an anhydride functional resin or anhydride functional compound in the residual high acid value coating composition.

Suitable polyols are oligomers or polymers having two or more reactive hydroxyl groups per molecule, and may include, but are not limited to, polyether polyols, polyester polyols, polyester polyether polyols, acrylic polyols, glycols and mixtures of the forgoing.

By way of example, the polyester polyols may comprise those formed from esterifying at least one di or higher polycaboxylic acid or anhydride such as adipic acid, phthalic acid, isophthalic acid or terephthalic acid, as well as castor oil formed from glycerin and castor fatty acid, and glycols, triols, or higher polyols such as ethylene glycol, neopentyl glycol and trimethylol propane; the polyether polyols may comprise polypropylene glycols, polyethylene glycols, polytetramethylene glycols; and the glycols may comprise propylene glycol, neopentyl glycol, hexanediol, and butanediol.

Suitable polyester polyols include those formed from diacids, or their monoester, diester, or anhydride counterparts, and diols. The diacids may be saturated C₄-C₁₂ aliphatic acids, including branched, unbranched, or cyclic materials, and/or C₈-C₁₅ aromatic acids. Examples of suitable aliphatic acids include, for example, succinic, glutaric, adipic, pimelic, suberic, azelaic, sebacic, 1,12-dodecanedioic, 1,4-cyclohexanedicarboxylic, and 2-methylpentanedioic acids. Examples of suitable aromatic acids include, for example, terephthalic, isophthalic, phthalic, 4,4'-benzophenone dicarboxylic, and 4,4'-diphenylamine dicarboxylic acids. The diols may be C₂-C₁₂ branched, unbranched, or cyclic aliphatic diols. Examples of suitable diols include, for example, ethylene glycol, 1,3-propylene glycol, 1,2-propylene glycol, 1,4-butandediol, 1,3-butandediol, hexanediols, 2-methyl-2,4-pentanediol, cyclohexane-1,4-dimethanol, and 1,12-dodecanediol.

Suitable polyether polyols include polyoxy-C₂-C₆-alkylene polyols, including branched and unbranched alkylene groups. Examples of suitable polyether diols include, for example, polyethylene oxide, poly(1,2- and 1,3-propyleneoxide), poly(1,2-butyleneoxide), and random or block copolymers of ethylene oxide and 1,2-propylene oxide.

Suitable polyester polyether polyols may be made from the reaction of polyethers and acids, for example, adipic acid, phthalic acid, isophthalic acid or terephthalic acid.

Suitable acrylic polyols include polyols based on monoethylenically unsaturated monomers, such as monoethylenically unsaturated carboxylic acids and esters thereof, styrene, vinyl acetate, vinyl trimethoxysilane, and acrylamides; including but not limited to methyl acrylate, butyl acrylate, ethyl acrylate, 2-ethylhexyl acrylate, hydroxylbutyl acrylate, hydroxyethyl acrylate, glycidyl acrylate, lauryl acrylate, and acrylic acid. The polymers may be homopolymers or copolymers. The copolymers may also contain significant portions of methacrylate monomers, for example, methyl methacrylate, butyl methacrylate, hydroxyethyl methacrylate, lauryl methacrylate, glycidyl methacrylate and methacrylic acid.

Polyanhydride materials suitable for crosslinking the polyols to generate a residual high acid value resin will have an average of at least two anhydride groups per molecule, and may include acrylic polyanhydrides, wherein two or more anhydride moieties, have been reacted onto an acrylic polymer backbone; however polyanhydride functional urethanes, polyesters, polyethers and the like may also be used. Sufficient anhydride functionality should be employed to generate the desired acid value in the crosslinked resin, accounting for free acid groups present elsewhere in the coating and potential reactivity between functional groups in adjoining layers and the anhydride rings. In some embodiments, polyanhydride may generally be used in amounts sufficient to provide an anhydride to hydroxyl molar ratio of between about 0.75 and about 1.5.

According to some embodiments of the invention, a residual high acid value coating composition may comprise, in addition to a polyol and polyanhydride, an epoxy functional material. The epoxy functional material may be selected to enhance crosslinking within the resin, by crosslinking with anhydride or free acid groups in the composition. Suitable epoxy compounds will, most usefully be polyepoxides having an average of at least two epoxy groups per molecule.

It is only necessary that the epoxy compounds have a sufficiently low volatility to remain in the coating composition under the applicable conditions of cure.

The polyepoxy compound may be a monomeric epoxy compound, or an oligomeric or polymeric epoxy compound (e.g., an epoxy resin). Suitable polyepoxy compounds may include glycidyl ether-type epoxy compounds [for example, a glycidyl ether obtained by reaction of a polyhydroxy compound (e.g., a bisphenol, a polyhydric phenol, an alicyclic polyhydric alcohol, and an aliphatic polyhydric alcohol) and epichlorohydrin (for example, a (poly)C2-C4 alkylene glycol diglycidyl ether such as ethylene glycol diglycidyl ether, diethylene glycol diglycidyl ether or a polyethylene glycol diglycidyl ether; a diglycidyl ether of a polyhydric phenol such as resorcin or hydroquinone; a diglycidyl ether of an alicyclic polyhydric alcohol such as cyclohexanediol, cyclohexanedimethanol or a hydrogenated bisphenol; a diglycidyl ether of a bisphenol (e.g., a bis(hydroxyphenyl)alkane such as 4,4'-dihydroxybiphenyl or bisphenol A) or a C2-C3 alkylene oxide adduct thereof), and a novolak-type epoxy resin (e.g., a phenol-novolak-type or cresol-novolak-type epoxy resin)]; a glycidyl ester-type epoxy compound; an alicyclic epoxy compound (or a cyclic aliphatic epoxy resin); a heterocyclic epoxy resin (e.g., triglycidyl isocyanurate (TGIC), and a hydantoin-type epoxy resin); a glycidyl amine-type epoxy compound [for example, a reaction product of an amine and epichlorohydrin, e.g., an N-glycidyl aromatic amine (e.g., tetraglycidyldiaminodiphenylmethane (TGDDM), triglycidylaminophenol (e.g., TGPAP, and TGMAP), diglycidylaniline (DGA), diglycidyltoluidine (DGT), and tetraglycidylxylylenediamine (e.g., TGMXA)), and an N-glycidyl alicyclic amine (e.g., tetraglycidylbisaminocyclohexane)]; and others.

The amount of epoxy compounds employed in the residual high acid value coating composition must be selected in view of the calculated effect of the epoxy on the acid value of any residual high acid value resins and of the coating generally and will necessarily vary.

In another embodiment, a residual high acid value coating composition may comprise, in addition to the polyanhydride crosslinker, an isocyanate functional material suitable for crosslinking the polyols. The isocyanate functional
material may be selected from materials that are well known in the art and may include mono-, di-, tri-, and multi-functional isocyanates. Di- and tri- and higher functional isocyanates are particularly useful. Representative isocyanates will have two or more isocyanate groups per molecule and may include the aliphatic compounds such as ethylene diisocyanate, trimethylene diisocyanate, tetramethylene diisocyanate, pentamethylene diisocyanate, hexamethylene diisocyanate, 1,2-propylene diisocyanate, 1,2-butylene diisocyanate, 2,3-butylene diisocyanate, 1,3-butylene diisocyanate, ethylidene diisocyanate and butylidene diisocyanate; the cycloalkylene compounds such as 3-isocyanatomethyl-3,5,5-trimethylcyclohexylisocyanate, and 1,3-cyclopentane diisocyanate, 1,3-cyclohexane diisocyanate, and 1,2-cyclohexane diisocyanate; the aromatic compounds such as m-phenylene diisocyanate, p-phenylene diisocyanate, 4,4'-diphenyl diisocyanate, 1,5-naphthalene diisocyanate and 1,4-naphthalene diisocyanate; the aliphatic-aromatic compounds such as 4,4'-diphenylene methane diisocyanate, 2,4- or 2,6-toluene diisocyanate, or mixtures thereof, 4,4'-toluidine diisocyanate, and 1,4-xylylene diisocyanate; the nuclear substituted aromatic compounds such as dianisidine diisocyanate, 4,4'-diphenylether diisocyanate and chlorodiphenylene diisocyanate; the triisocyanates such as triphenyl methane-4,4',4"-triisocyanate, 1,3,5-triisocyanate benzene and 2,4,6-triisocyanate toluene; and the tetraisocyanates such as 4,4'-diphenyl-dimethyl methane-2,2'-5,5 '-tetraisocyanate; the polymerized polyisocyanates such as tolylene diisocyanate dimers and trimers, and other various polyisocyanates containing biuret, urethane, and/or allophanate linkages.

In embodiments in which polyisocyanates are employed as the dominant crosslinker, the residual high acid value coating composition should comprise at least high acid functional polyols, or, if only low or non-acid functional polyols are used, at least one other high acid functional, non-polyol resin should be employed to drive the overall acid value of the coating. Appropriate blends of crosslinking agents may also be used in the invention. The amount of the isocyanate crosslinking agent in the coating composition usefully provides an NCO to OH molar ratio of about 0.5 to 2.0, and in another embodiment, about 0.75 to 1.5. In one embodiment, the NCO to OH ratio is 0.75 to 1.5. In another embodiment the NCO to OH ratio may be 0.9 to 1.2.

The residual high acid value coating composition may include an amount of one or more catalysts that catalyze the crosslinking reaction of the hydroxyl group with the anhydride and/or isocyanate. Useful catalysts, depending on the crosslinker selected, may include tertiary amines, such as triethylene diamine, N-methyl morpholine, N-ethyl morpholine, diethyl ethanolamine, 1 -methyl-4-dimethylamino ethyl piperazine, 3-methoxy-N-dimethyl propyl amine, N-dimethyl-N'-methyl isopropyl propylene diamine, N,N-diethyl-3-diethyl amino propylamine, N,N-dimethyl benzyl amine, dicyclohexylmethylamine, 2,4,6-tris dimethylaminomethylphenol, N,N-dimethyl cyclohexylamine, triethylamine, tri-n-butylamine, 1 ,8-diaza-bichloro[5,40]-undecene-7 N-methyl diethanolamine, N,N-dimethyl ethanolamine, N,N-diethyl cyclohexylamine, N,N,N 'N'-tetramethyl -ethylene diamine, 1 ,4-diaza-bicyclo-[2,2,2]-octane N-methyl-N'-dimethylaminoethyl-piperazine, bis-(N,N-diethylaminoethyl)-adipate, N,N-diethylbenzylamine, pentamethyldiethylene triamine, N,N,N ',N'-tetramethyl-1,3-butanediamine, 1,2-dimethylimidazole, 2-methylimidazole; tin compounds, such as stannous chloride, dibutyl tin di-2-ethyl hexoate, stannous octoate, dibutyl tin dilaurate, trimethyl tin hydroxide, dimethyl tin dichloride, dibutyl tin diacetate, dibutyl tin oxide, tributyl tin acetate, tetramethyl tin, dimethyl dioctyl tin, tin ethyl hexoate, tin laurate, dibutyl tin maleate, dioctyl tin diacetate; other metal organics, such as zinc octoate, phenyl mercuric propionate, lead octoate, lead naphthenate, and copper naphthenate.

Particularly useful in conjunction with polyanhydride crosslinkers is 1-methylimidizole. Useful amounts of catalyst will be about 0.01 to 6%, based on the total weight of the anhydride solids.

The residual high acid value coating composition may comprise a resin system consisting essentially of one or more residual high acid value resins. In a useful embodiment, the residual high acid value resins may comprise about 5 to 85% weight percent with respect to total resin weight employed in the residual high acid value coating. In another embodiment, the residual high acid value resins may comprise about 15 to 70% weight percent with respect to total resin weight employed in the residual high acid value coating. In another embodiment, the residual high acid value resins may comprise about 20 to 60% weight percent with respect to total resin weight employed in the residual high acid value coating. In still another embodiment, the residual high acid value resins may comprise about 25 to 45% weight percent with respect to total resin weight employed in the residual high acid value coating. In these latter embodiments, the remaining resins may comprise non-high acid value resins, such as polyurethanes, acrylics, polyesters, and the like or one or more unreacted, non-volatile, acid functional compounds.

A wide variety of non-volatile, acid-functional compounds may optionally be used in combination with the residual high acid value resins taught above, with preference given to carboxylic acid functional compounds.

The residual high acid value coating composition may, in addition to the residual high acid value resin and, optionally, other resins or free acid containing materials, comprise additives selected to improve coating and film characteristics such as flow additives, fillers, opacifying pigments, extender pigments, heat and light stabilizers, antioxidants, corrosion inhibitors, condensation catalysts, crosslinking catalysts, plasticizers and so forth.

With respect to pigments, it is contemplated in one general embodiment of the invention, that the coating composition comprising the high acid value resin would be a decorative coat composition and would, therefore, comprise one or more of the commonly employed opacifying pigments. Representative opacifying pigments include white pigments such as titanium dioxide, zinc oxide, antimony oxide, and the like and organic or inorganic chromatic pigments such as iron oxide, carbon black, phthalocyanine blue, and the like. Extender pigments such as calcium carbonate, clay, silica, talc, may be used.

In connection with the use of pigments, pigment dispersants may be used in compositionally appropriate amounts. Any type of suitable dispersant may be used in accordance with this invention, such as anionic, cationic, amphoteric, or nonionic dispersants. Such dispersing agents include polymeric dispersants. In addition, particle dispersants may also be used.

In one embodiment, the coating composition may include from about 0.1% to about 30%, by weight, dispersant based on the total pigment weight in the composition. In another useful embodiment the dispersant is present in an amount from about 0.5% to about 20%, by weight, based upon the total pigment weight of the composition. In yet another useful embodiment, dispersant is present in an amount of about 1% by weight, based on the total pigment of the composition.

Though it is contemplated that one function of a coating composition comprising a residual high acid value resin (as described herein) is as a decorative coat to be applied directly to the sol-gel layer, thereby eliminating the need of a separate primer coat, it will be recognized that the coating composition could be employed in the position of a primer coat, (i.e., under a decorative coat) or, potentially, as a clear coat applied directly to the sol-gel film, in circumstances where a decorative coat may be unnecessary. It is believed that the attendant benefits to the integrity of the sol-gel layer brought about by the presence of the high acid value in the adjacent coating, may be anticipated, whether the adjacent coating is described as a primer coat, decorative coat or clear coat (having essentially no opacifying pigments).

Suitable corrosion inhibitors may be either organic additives or inorganic additives. Suitable organic anti-corrosive additives include short aliphatic dicarboxylic acids such as maleic acid, succinic acid, and adipic acid; triazoles such as benzotriazole and tolytriazole; thiazoles such as mercaptobenzothiazole; thiadiazoles such as 2-mercapto-5hydrocarbylthio-1,3,4-thiadiazoles, 2-mercapto-5-hydrocarbyldithio-1,3,4-thiadiazoles, 2,5-bis(hydrocarbylthio)-1,3,4thiadiazoles, and 2,5-(bis)hydrocarbyldithio)-1,3,4thiadiazoles; sulfonates; and imidazolines. Suitable inorganic additives include chromates, borates, phosphates, silicates, nitrites, and molybdates. Suitable inorganic corrosion inhibitors may include barium metaborate, zinc borate, zinc potassium chromate, zinc tetroxy chromate, strontium chromate, red lead, basic lead silicochromate, zinc molybdate, calcium molybdate, calcium zinc molybdate, zinc phosphate, strontium phosphate, calcium phosphate, aluminum triphosphate, aluminum zinc phosphate, zinc calcium phosphate, zinc aluminum calcium phosphate, zinc calcium strontium phosphate, zinc calcium aluminum strontium phosphate, strontium aluminum phosphate, calcium aluminum phosphate, zinc borate phosphate hydrate, zinc hydroxy phosphate, calcium borosilicate, calcium barium phosphosilicate, calcium strontium phosphosilicate, calcium strontium zinc phosphosilicate, calcium ion exchange silica, zinc oxide, and zinc dust.

Suitable condensation cure catalysts may include, but are not limited to, titanic acid esters such as tetrabutyl titanate, tetra-t-butyl titanate, tetrapropyl titanate, partially chelated organotitanium and organozirconium compounds such as diisopropoxytitanium-di(ethylaceoacetonate) and di(n-propoxy)zirconium-di(ethylaceoacetonate), organotin compounds such as dibutyltin dilaurate, dibutyltin diacetate, dimethyltin dineodecanoate, and stannous octoate, organoaluminum compounds such as aluminum trisacetylacetonate, aluminum trisethylacetonate, diisopropoxyaluminum ethylacetonate, bismuth salts and organic carboxylic acids such as bismuth tris(2-ethylhexoate), bismuth tris(neodecanoate), chelate compounds such as zirconium tetracetylacetonate, titanium tetraacetylacetonate, metal carboxylates, organo lead compounds such as lead octylate, organovanadium compounds, strong acids such as hydrogen bromide, hydrofluoric acid,hydrochloric acid, perchloric acid, phosphoric acid, nitric acid, sulfuric acid, para toluene sulfonic acid, amine compounds such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole, 1,1-diazabicyclo(5,4,0)undecene-7 (DBU), and their salts with carboxylic acid, low-molecular-weight polyamide resins obtained from excess polyamines and poly basic acids, reaction products of excess polyamines and epoxy compounds, and combinations thereof. Condensation cure catalysts in the residual high acid value coating compositions of the present invention may facilitate condensation in coating layers adjacent to the residual high acid value coating.

The residual high acid value coating composition will comprise one or more conventional solvents such as ketone, ester, alcohol, glycol ether, and glycol ether ester solvents. Exemplary, non-limiting examples of solvents that may be useful include xylene, n-butyl acetate, t-butylacetate n-butyl propionate, naptha, ethyl 3-ethoxypropionate, toluene, methyl ethyl ketone (MEK), acetone, methyl propyl ketone(MPK), methyl-n-amyl ketone (MAK), propylene glycol methylether acetate (PMA) and the like.

The residual high acid value coating composition as described herein is applied directly atop the sol-gel film. Application may be by any conventional means, such as spraying, brushing, rolling, dipping. The typical method for applying the coatings of the present invention is by spraying. Air spray equipment may include conventional air spray (using 20-80 psi air pressure to atomize the liquid paint) which provides a low level of transfer efficiency, and high volume low pressure (HVLP) (uses less than 10 psi air pressure and 12-16 cubic feet of air per minute to atomize the liquid paint) which provides a higher level of transfer efficiency than conventional methods of application. Airless spray application (using 1500-3000 psi fluid pressure to force the coating through a small orifice to atomize the liquid paint) provides atomization for high viscosity coatings, and improved transfer efficiencies. Air assisted airless (using 700-1200 psi fluid pressure to force the coating though a small orifice and up to 35psi atomization air to atomize the liquid paint) provides atomization for higher viscosity coating, and improved film smoothness and appearance over airless application.

Additional application methods consist of electrostatic application using air atomizing spray equipment, air assisted airless, and high-speed rotary application equipment such as a bell or disc. Electrostatic application provides a higher level of transfer efficiency as compared to other non-electrostatic application.

Where the residual high acid value coating composition is applied as a decorative coat immediately on top of the sol-gel film, there may subsequently be applied to the decorative coat, one or more layers of a clear coat composition, such as a transparent urethane coating. The clearcoat may contain ultraviolet light absorbers such as hindered amines at a level ranging up to about 6% by weight of the vehicle solids as is well known in the art. The clearcoat can be applied by any application method known in the art, but preferably will be spray applied. If desired, multiple layers of basecoat and/or clearcoat can be applied. Typically, both the basecoat and the clearcoat will each be applied to give a dry film thickness of about 0.2 to about 6 mils, and especially about 0.5 to about 3.0 mils.

The coating system described herein may be employed on any number of substrates that are amenable to pretreatment with sol-gel films. General examples of suitable substrates may include, at least, those materials classified as electron acceptors and/or electron donors. More particularly, suitable materials include metals, plastics, resins, and the like. Specifically, aluminum, anodized aluminum and aluminum alloys, titanium and titanium alloys, cold rolled steel, hot rolled steel, stainless steel, hot dipped galvaneal, electrogalvaneal, hot dipped galvanized, electrogalvanized, and iron, manganese, or zinc phosphated steel and the like are suitable substrates for the coating system described in its various embodiments. Examples of items having substrates of the materials described above may include manufactured parts and goods, such as airplanes, spacecraft, cars, boats, golf clubs, parts for these and other items, and the like.

## Claims

1. A coating system for application to a substrate having a sol-gel film layer applied thereon, the system comprising:
a sol-gel film layer, and
a residual high acid value coating composition applied directly on top of at least a portion of the sol-gel film, wherein the residual high acid value coating composition is a solvent borne composition that cures having sufficient residual free acid groups to provide the film with the equivalent of an acid number of greater than 65 mgKOH/g,
wherein the residual high acid value coating comprises a residual free acid resin,
wherein the residual high acid value resin comprises the reaction product of a monomer blend comprising
i.) at least one polyol; and
ii.) at least one polyanhydride;
wherein the residual free acid resin cures having residual free acid groups sufficient to provide the resin with the equivalent of an acid number of greater than 65mgKOH/g.

2. The coating system of claim 1, wherein the residual free acid resin cures having residual free acid groups sufficient to provide the resin with the equivalent of an acid number of greater than 85 mgKOH/g.

3. The coating system of claim 1, wherein the residual high acid value coating composition further comprises a condensation catalyst, or
wherein the monomer blend of the residual high acid value resin further comprises at least one one polyepoxy compound.

4. The coating system of claim 1, wherein the coating system is for application to a metal substrate.

5. The coating system of claim 4, further comprising a condensation catalyst.

6. The coating system of claim 5, wherein the sol-gel film comprises the reaction product of an organometallic compound and an organosilane compound, preferably wherein the sol-gel film comprises the reaction product of 3-glycidoxypropyltrimethoxysilane and zirconium (IV) n-propoxide.

7. The coating system of claim 4, wherein the crosslinker comprises a blend of a polyanhydride crosslinker and a polyepoxy crosslinker, and optionally further comprising a condensation catalyst.

8. The coating system of claim 4, wherein the crosslinker comprises a blend of at least one polyanhydride and at least one isocyanate functional crosslinker having two or more functional isocyanates.

9. The coating system of claim 4, wherein the film forming resin blend consists essentially of the residual high acid value resin.

10. The coating system of claim 4, wherein the film forming resin blend comprises 5 to 85% with respect to total resin weight of one the residual high acid value resin.

11. The coating system of claim 10, wherein the film forming resin blend comprises 25 to 45% with respect to total resin weight of the residual high acid value resin.

12. The coating system of claim 4, wherein the residual high acid value coating composition further comprises an opacifying pigment.

13. A coated substrate comprising:
a. A metal panel;
b. A sol-gel film layer applied onto at least a portion of the metal panel;
c. A solvent-borne residual high acid level coating applied directly on top of the sol-gel film, wherein the residual high acid level coating comprises:
i. a film forming resin blend comprising at least one residual high acid value resin having an acid value greater than 65 mg KOH/g, the residual high acid value resin comprising the reaction product of
1. a polyol, and;
2. at least one polyanhydride;
ii. one or more opacifying pigments
iii. at least one organic solvent
iv. optionally, a catalyst for catalyzing the crosslinking reaction of the polyol and the crosslinker; and
d. optionally, a transparent clearcoat applied on top of the decorative coat.

14. The coated substrate of claim 13, wherein the sol-gel film comprises the reaction product of an organometallic compound and an organosilane compound.

15. The coated substrate of claim 14, wherein the sol-gel film comprises the reaction product of 3-glycidoxypropyltrimethoxysilane and zirconium (IV) n-propoxide.

## Patentansprüche

1. Ein Beschichtungssystem zum Auftrag auf einem Substrat, auf dem eine Sol-Gel-Filmschicht aufgetragen ist, wobei das System umfasst:
eine Sol-Gel-Filmschicht und
ein Beschichtungszusammensetzung mit hohem Restsäurewert, die direkt über wenigstens einem Teil des Sol-Gel-Films aufgetragen ist, wobei die Beschichtungszusammensetzung mit hohem Restsäurewert eine Zusammensetzung auf Lösemittelbasis ist, die aushärtet, so dass ausreichend restliche Freie-Säure-Gruppen verbleiben, um den Film mit dem Äquivalent zu einer Säurezahl von mehr als 65 mg KOH/g auszustatten,
wobei die Beschichtung mit hohem Restsäurewert ein Harz mit restlicher freier Säure umfasst,
wobei das Harz mit hohem Restsäurewert das Reaktionsprodukt einer Monomerenmischung umfasst, die umfasst:
i.) wenigstens ein Polyol und
ii.) wenigstens ein Polyanhydrid,
wobei das Harz mit restlicher freier Säure aushärtet, so dass ausreichend restliche Freie-Säure-Gruppen verbleiben, um das Harz mit dem Äquivalent zu einer Säurezahl von mehr als 65 mg KOH/g auszustatten.

2. Das Beschichtungssystem nach Anspruch 1, wobei das Harz mit restlicher freie Säure aushärtet, so dass ausreichend restliche Freie-Säure-Gruppen verbleiben, um das Harz mit dem Äquivalent zu einer Säurezahl von mehr als 85 mg KOH/g auszustatten.

3. Das Beschichtungssystem nach Anspruch 1, wobei die Beschichtungszusammensetzung mit hohem Restsäurewert ferner einen Kondensationskatalysator umfasst, oder
wobei die Monomerenmischung des Harzes mit hohem Restsäurewert wenigstens eine Polyepoxidverbindung umfasst.

4. Das Beschichtungssystem nach Anspruch 1, wobei das Beschichtungssystem zum Auftrag auf einem Metallsubstrat dient.

5. Das Beschichtungssystem nach Anspruch 4, das ferner einen Kondensationskatalysator umfasst.

6. Das Beschichtungssystem nach Anspruch 5, wobei der Sol-Gel-Film das Reaktionsprodukt aus einer metallorganischen Verbindung und einer Organosilanverbindung umfasst, vorzugsweise wobei der Sol-Gel-Film das Reaktionsprodukt aus 3-Glycidoxypropyltrimethoxysilan und Zirkonium(IV)-n-propoxid umfasst.

7. Das Beschichtungssystem nach Anspruch 4, wobei das Vernetzungsmittel eine Mischung aus einem Polyanhydrid-Vernetzungsmittel und einem Polyepoxid-Vernetzungsmittel umfasst und gegebenenfalls ferner einen Kondensationskatalysator umfasst.

8. Das Beschichtungssystem nach Anspruch 4, wobei das Vernetzungsmittel eine Mischung aus wenigstens einem Polyanhydrid und wenigstens einem isocyanatfunktionellen Vernetzungsmittel mit zwei oder mehr funktionellen Isocyanaten umfasst.

9. Das Beschichtungssystem nach Anspruch 4, wobei die filmbildende Harzmischung im Wesentlichen aus dem Harz mit hohem Restsäurewert besteht.

10. Das Beschichtungssystem nach Anspruch 4, wobei die filmbildende Harzmischung 5 bis 85% ausmacht, bezog auf das Gesamtharzgewicht des Harzes mit hohem Restsäurewert.

11. Das Beschichtungssystem nach Anspruch 10, wobei die filmbildende Harzmischung 25 bis 45% ausmacht, bezog auf das Gesamtharzgewicht des Harzes mit hohem Restsäurewert.

12. Das Beschichtungssystem nach Anspruch 4, wobei die Beschichtungszusammensetzung mit hohem Restsäurewert ferner ein Trübungspigment umfasst.

13. Ein beschichtetes Substrat, umfassend:
a. eine Metallplatte,
b. eine Sol-Gel-Filmschicht, die auf wenigstens einem Teil der Metallplatte aufgetragen ist,
c. eine Beschichtung mit hohem Restsäurewert auf Lösemittelbasis, die direkt über dem Sol-Gel-Film aufgetragen ist, wobei die Beschichtung mit hohem Restsäurewert umfasst:
i. eine filmbildende Harzmischung, die wenigstens ein Harz mit hohem Restsäurewert mit einem Säurewert von mehr als 65 mg KOH/g umfasst, wobei das Harz mit hohem Restsäurewert das Reaktionsprodukt umfasst aus:
1. einem Polyol und
2. wenigstens einem Polyanhydrid,
ii. ein oder mehrere Trübungspigmente,
iii. wenigstens ein organisches Lösemittel,
iv. gegebenenfalls einen Katalysator zur Katalyse der Vernetzungsreaktion zwischen dem Polyol und dem Vernetzungsmittel, und
d. gegebenenfalls einen transparenten Klarlack, der über der Dekorschicht aufgetragen ist.

14. Das beschichtete Substrat nach Anspruch 13, wobei der Sol-Gel-Film das Reaktionsprodukt aus einer metallorganischen Verbindung und einer Organosilanverbindung umfasst.

15. Das beschichtete Substrat nach Anspruch 14, wobei der Sol-Gel-Film das Reaktionsprodukt aus 3-Glycidoxypropyltrimethoxysilan und Zirkonium(IV)-n-propoxid umfasst.

## Revendications

1. Système de revêtement pour application à un substrat sur lequel une couche d'un film sol-gel est appliquée, le système comprenant :
une couche d'un film sol-gel et
une composition de revêtement à fort indice d'acide résiduel appliquée directement sur au moins une partie du film sol-gel, où la composition de revêtement à fort indice d'acide résiduel est une composition à base de solvants qui durcit en ayant suffisamment de groupements acides libres résiduels pour produire le film avec l'équivalent d'un indice d'acidité dépassant 65 mg KOH/g,
où le revêtement à fort indice d'acide résiduel comprend une résine à fonctions acides libres résiduelles,
où la résine à fort indice d'acide résiduel comprend le produit de réaction d'un mélange de monomères comprenant
i.) au moins un polyol ; et
ii.) au moins un polyanhydride ;
où la résine à fonctions acides libres résiduelles durcit en ayant suffisamment de groupements acides libres résiduels pour produire la résine avec l'équivalent d'un indice d'acidité dépassant 65 mg KOH/g.

2. Système de revêtement de la revendication 1, où la résine à fonctions acides libres résiduelles durcit en ayant suffisamment de groupements acides libres résiduels pour produire la résine avec l'équivalent d'un indice d'acidité dépassant 85 mg KOH/g.

3. Système de revêtement de la revendication 1, où la composition de revêtement à fort indice d'acide résiduel comprend en outre un catalyseur de condensation ou
où le mélange de monomères de la résine à fort indice d'acide résiduel comprend en outre au moins un composé polyépoxyde.

4. Système de revêtement de la revendication 1, où le système de revêtement est pour application à un substrat métallique.

5. Système de revêtement de la revendication 4, comprenant en outre un catalyseur de condensation.

6. Système de revêtement de la revendication 5, où le film sol-gel comprend le produit de réaction d'un composé organométallique et d'un composé organosilane, de préférence où le film sol-gel comprend le produit de réaction du 3-glycidoxypropyltriméthoxysilane et du n-propoxyde de zirconium (IV).

7. Système de revêtement de la revendication 4, où l'agent de réticulation comprend un mélange d'un agent de réticulation polyanhydride et d'un agent de réticulation polyépoxyde et comprend en outre éventuellement un catalyseur de condensation.

8. Système de revêtement de la revendication 4, où l'agent de réticulation comprend un mélange d'au moins un agent de réticulation polyanhydride et d'au moins un agent de réticulation à fonctions isocyanates ayant deux ou plus fonctions isocyanates.

9. Système de revêtement de la revendication 4, où le mélange résineux filmogène consiste essentiellement en la résine à fort indice d'acide résiduel.

10. Système de revêtement de la revendication 4, où le mélange résineux filmogène comprend de 5 à 85 %, rapportés au poids total de la résine, de la résine à fort indice d'acide résiduel.

11. Système de revêtement de la revendication 10, où le mélange résineux filmogène comprend de 25 à 45 %, rapportés au poids total de la résine, de la résine à fort indice d'acide résiduel.

12. Système de revêtement de la revendication 4, où la composition de revêtement à fort indice d'acide résiduel comprend en outre un pigment opacifiant.

13. Substrat revêtu comprenant :
a. un panneau métallique ;
b. une couche d'un film sol-gel appliquée sur au moins une partie du panneau métallique ;
c. un revêtement à base de solvants à forte teneur en acides résiduels appliqué directement sur le film sol-gel, le revêtement à forte teneur en acides résiduels comprenant :
i. un mélange résineux filmogène comprenant au moins une résine à fort indice d'acide résiduel ayant un indice d'acide qui dépasse 65 KOH/g, la résine à fort indice d'acide résiduel comprenant le produit de réaction
1. d'un polyol et ;
2. d'au moins un polyanhydride ;
ii. un ou plusieurs pigments opacifiants
iii. au moins un solvant organique
iv. éventuellement un catalyseur pour catalyser la réaction de réticulation du polyol et de l'agent de réticulation ; et
d. éventuellement un vernis de finition transparent appliqué sur la couche décorative.

14. Substrat revêtu de la revendication 13, où le film sol-gel comprend le produit de réaction d'un composé organométallique et d'un composé organosilane.

15. Substrat revêtu de la revendication 14, où le film sol-gel comprend le produit de réaction du 3-glycidoxypropyltriméthoxysilane et du n-propoxyde de zirconium (IV).
